# EUROPEAN PATENT APPLICATION

(11) **EP 4 625 558 A1**
(43) Date of publication of application: **01.10.2025**
(21) Application number: 25159834.8
(22) Date of filing: 25.02.2025
(51) Int. Cl.: H01M 8/04119, B01D 53/26, B01D 53/22, H01M 8/04089, H01M 8/065, H01M 8/10

(54) **SPIRAL WOUND WATER EXCHANGERS, POWER GENERATORS COMPRISING THE SAME, AND METHODS OF USE THEREOF**

(30) Priority: 22.03.2024 US 202418613647
(71) Applicant: Honeywell International Inc., Charlotte, NC 28202 (US)
(72) Inventor: FRANKLIN, Luke, Charlotte, 28202 (US); COTE, Tyler, Charlotte, 28202 (US)
(74) Representative: Lucas, Peter Lawrence

(57) **Abstract**

Spiral wound water exchangers, power generators comprising the same, and methods of use thereof are provided. The methods include providing a first stream of air having a first humidity to a spiral wound water exchanger, providing a second stream of hydrogen having a second humidity to the spiral wound water exchanger, flowing the air and the hydrogen through the spiral wound water exchanger, wherein water is transported from the air to the hydrogen as the air and the hydrogen flow through the spiral wound water exchanger, expelling a third stream of air having a third humidity from the spiral wound water exchanger, and expelling a fourth stream of hydrogen having a fourth humidity from the spiral wound water exchanger, wherein the third humidity is less than the first humidity and the fourth humidity is greater than the second humidity.

## Description

### TECHNICAL FIELD

The present invention generally relates to fuel cell based power generators, and more particularly relates to a spiral wound water exchanger for providing water vapor to a hydrogen generator of a fuel cell based power generator.

### BACKGROUND

The operational duration of unmanned air vehicles (UAVs), commonly known as drones, is restricted by their power supplies. Currently, advanced UAVs utilize lightweight lithium-ion/polymer batteries with specific energy capacities ranging from 200 to 300 Wh/kg, allowing for flight durations of approximately 20 to 60 minutes. However, for emerging applications such as infrastructure inspection (e.g., roads, bridges, power lines, rail, pipelines) and package delivery, there is a demand for extended flight times on a single battery charge. In some scenarios, flight durations exceeding six hours may be necessary for these UAVs to become commercially feasible.

Some challenges lie in achieving efficient energy storage and utilization. Proton exchange membrane (PEM) fuel cells, suitable for portable power and micro air vehicles, require compact, lightweight, and high-capacity hydrogen sources. While commercially available hydrogen sources such as metal hydrides, compressed hydrogen in cylinders, or catalytic waterborohydride hydrogen generators can produce hydrogen at high rates, they may be bulky and heavy. Additionally, current gas-to-gas water exchangers, which facilitate water exchange between flowing gas streams without mixing, may be too heavy and have excessive pressure drops for use in airborne applications like UAVs.

Hence, there is an ongoing demand for systems and methods capable of improving energy storage for UAVs. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various examples, a spiral wound water exchanger is provided that includes a shell having first end, a second end, and an interior compartment between the first end and the second end, a central tube within the shell extending between the first end and the second end and aligned along a longitudinal center axis of the shell and having a plurality of holes along a longitudinal length thereof, a plurality of envelopes fixed to and extending from the central tube, each of the plurality of envelopes including a first permeable spacer disposed between a pair of membranes, wherein the pair of membranes are selectively permeable to water and nonpermeable to hydrogen and oxygen, wherein each of the pair of membranes include a first glue line along edges thereof configured to seal the first permeable spacer therebetween, each of the first permeable spacers in fluidic communication with at least some of the plurality of holes along the central tube, a plurality of second permeable spacers fixed to and extending from the central tube, each of the plurality of second permeable spacers disposed between a corresponding pair of the envelopes, an air inlet configured to supply air to the central tube at the first end of the shell, an air outlet configured to receive the air from the central tube at the second end of the shell, a feed inlet configured to supply the hydrogen to the plurality of second permeable spacers at the first end of the shell, and a feed outlet configured to receive the hydrogen from the plurality of second permeable spacers at the second end of the shell. The plurality of envelopes and the plurality of second permeable spacers are wound about the central tube within the shell to define a spiral wound structure.

In various examples, a power generator is provided that includes a fuel cell configured to generate electrical power via a chemical reaction that consumes hydrogen and oxygen, a source of air configured to provide the oxygen to a cathode side of the fuel cell, a hydrogen generator coupled to provide the hydrogen to an anode side of the fuel cell, and a spiral wound water exchanger that is configured to: receive air having a first humidity from the cathode side of the fuel cell and the hydrogen having a second humidity from the hydrogen generator, transfer water from the air to the hydrogen, and expel the air having a third humidity and the hydrogen having a fourth humidity hydrogen, wherein the third humidity is less than the first humidity and the fourth humidity is greater than the second humidity. The hydrogen is provided from the spiral wound water exchanger to the hydrogen generator.

In various examples, a method is provided that includes providing a first stream of air having a first humidity to a spiral wound water exchanger, providing a second stream of hydrogen having a second humidity to the spiral wound water exchanger, flowing the air and the hydrogen through the spiral wound water exchanger, wherein water is transported from the air to the hydrogen as the air and the hydrogen flow through the spiral wound water exchanger, expelling a third stream of air having a third humidity from the spiral wound water exchanger, and expelling a fourth stream of hydrogen having a fourth humidity from the spiral wound water exchanger, wherein the third humidity is less than the first humidity and the fourth humidity is greater than the second humidity.

Furthermore, other desirable features and characteristics of the spiral wound water exchanger, the power generator, and the method will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a schematic diagram of a fuel cell based power generator in accordance with an embodiment;
FIG. 2 is a perspective, exploded view of certain components of a spiral wound water exchanger in accordance with an embodiment;
FIG. 3 is perspective view of certain structural components of the spiral wound water exchanger of FIG. 2 in accordance with an embodiment;
FIG. 4 is an isolated view of a membrane unit of the spiral wound water exchanger of FIG. 2 in accordance with an embodiment; and
FIG. 5 is a flowchart illustrating an exemplary method for transferring water from a stream of air to a stream of hydrogen in accordance with an embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Systems and methods disclosed herein provide for a spiral wound water exchanger for a fuel cell based power generator. In various examples, The spiral wound water exchanger includes a plurality of membranes that are selectively permeable to water vapor over other gases (e.g. air, hydrogen, oxygen, nitrogen). In some examples, the water exchanger transfers water from a stream of air to a stream of hydrogen prior to supplying the humidified stream of hydrogen to a hydrogen generator of the power generator.

A water exchanger, in accordance with various examples, may be a light-weight, low pressure-drop water exchanger for a fuel cell based power system that is suitable for use in unmanned air vehicles (UAVs). For example, fuel cell based power systems incorporating a light-weight, low-pressure drop water exchanger in accordance with various examples can provide the increased UAVs endurance (e.g., flight time) needed for emerging applications including infrastructure inspection ( e.g. roads, bridges, power lines, rail, pipelines, etc.) and package delivery that may not be available with state of the art UAVs that use lithium ion/polymer batteries and provide flight times on the order of 20 to 60 minutes.

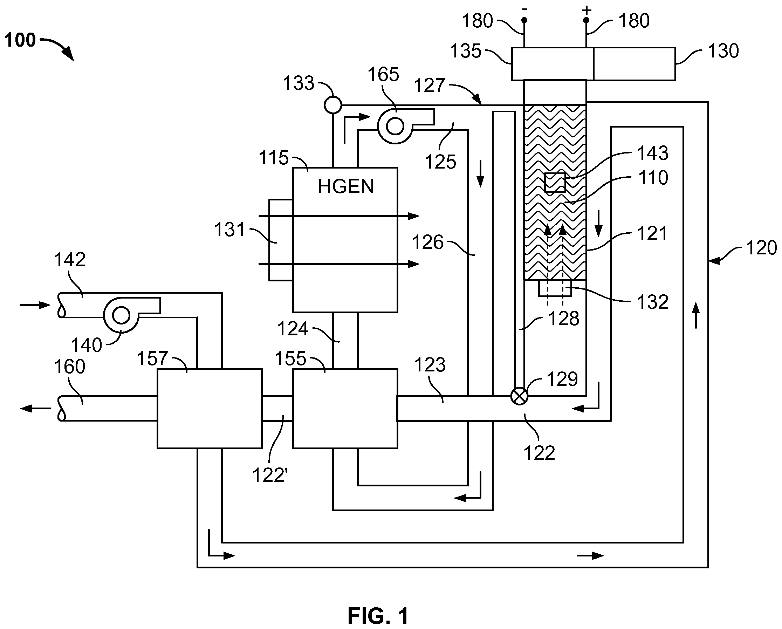

FIG. 1 is a schematic diagram of a fuel cell based power generator 100 in accordance with various examples. In the example shown in FIG. 1, the power generator 100 includes a fuel cell 110, a hydrogen generator 115, an air path 120, a hydrogen path 125, one or more water exchangers 155 and 157, a controller 135, and one or more batteries 130.

As used herein, the term "fuel cell" can, for example, refer to an electrochemical cell that converts chemical energy from a fuel into electricity through an electrochemical reaction. In various examples, the fuel cell 110 can include an anode, a cathode, and an electrically-insulating ion-conducting electrolyte (e.g., a membrane, such as a proton exchange membrane, or PEM) separating the anode and cathode, wherein at least one of the anode or cathode undergoes a chemical reaction that consumes hydrogen and generates an electrical potential across the electrodes. In some embodiments, the cathode of the fuel cell 110 consumes hydrogen gas and generates electrons and hydrogen ions. The hydrogen ions can travel across the electrolyte to the cathode, while the electrons can travel to the cathode via an electrical circuit connecting the anode to the cathode. At the cathode, the hydrogen ions can react with oxygen gas and the electrons produced by the anode to form water.

As used herein, the term "hydrogen generator" can, for example, refer to a device which contains one or more fuels (i.e., hydrogen-generating compositions) that release hydrogen responsive to exposure to water, which may be in vapor form (i.e., humidity). The phase of the water contacted with the hydrogen-generating composition to generate the hydrogen gas can be any suitable phase, such as liquid water (e.g., in a pure state, diluted state, or such as having one or more compounds or solvents dissolved therein) or gaseous water (e.g., water vapor, at any suitable concentration). The hydrogen-generating composition can be in any suitable form. The hydrogen-generating composition can, for example, be in a form of a solid, such as a loose powder or a compressed powder. The hydrogen-generating composition can also be in the form of grains or pellets (e.g., a powder or grains compressed into pellets). The hydrogen-generating composition can have any suitable density, such as, for example, about 0.5 g/cm³ to about 1.5 g/cm³ , or about 0.5 g/cm³ or less, or less than, equal to, or greater than about 0.6 g/cm³, 0.7, 0.8, 0.9, 1, 1.1, 1.2, 1.3, 1.4 g/cm³, or about 1.5 g/cm³ or more. The hydrogen generator 115 may include various hydrogen-generating compositions.

In various examples, the hydrogen-generating composition(s) may include one or more hydrides. The hydride(s) may be, for example, magnesium hydride (MgH₂), lithium hydride (LiH), aluminum hydride (AlH₃), calcium hydride (CaH₂), sodium aluminum hydride (NaAlH₄), sodium borohydride (NaBH₄), lithium aluminum hydride (LiAlH₄), ammonia borane (H₃NBH₃), diborane (B₂H₆), palladium hydride, LaNi₅H₆, TiFeH₂, and a combination thereof. In various embodiments, the hydrogen-generating composition(s) may include a metal hydride (e.g., an interstitial intermetallic hydride). The metal hydride(s) may be, for example, LaNi₅, LaNi_{4.6}Mn_{0.4}, MnNi_{3.5}Co_{0.7}Al_{0.8}, MnNi_{4.2}Co_{0.2}Mn_{0.3}Al_{0.3}, TiFe_{0.8}Ni_{0.2}, CaNi₅, (V_{0.9}Ti_{0.1})_{0.05}Fe_{0.05}, (V_{0.9}Ti_{0.1})_{0.95}Fe_{0.05}, LaNi_{4.7}Al_{0.3}, LaNi₅₋ₓAlₓ wherein x is about 0 to about 1, or any combination thereof (e.g., from LaNi₅ to LaNi₄Al). In various embodiments, the hydrogen-generating composition(s) may include one or more metal oxides. The metal oxide(s) may be any suitable metal oxide, such as zirconium (IV) oxide, hafnium (IV) oxide, titanium (IV) oxide, or a combination thereof. In various examples, the hydride(s) may be in any suitable proportion of the hydrogen-generating composition(s), such as about 10 to 99.99 wt.%, about 50 wt.% to about 99.9 wt.%, about 70 wt.% to about 99.9 wt.%, about 70 wt.% to about 90 wt.%.

In the example of FIG. 1, ambient air serves as an oxygen source for the fuel cell based power generator 100, a carrier gas for water vapor, and a coolant gas for the fuel cell 110 and hydrogen generator 115. A first fluid movement apparatus 140 (e.g., a fan) may draw in fresh air from ambient via an inlet 142 and circulates the air over a cathode side of the fuel cell 110 at 121 via the air path 120. The air path 120 is part of a cathode loop, which includes all the paths that the air circulates through, including interiors of components that the air passes through.

The hydrogen generator 115 provides hydrogen gas to the hydrogen path 125, which may split into two parts at a junction 127. The two parts include a primary path 126 and a secondary path 128. The primary path 126 recirculates released hydrogen back to hydrogen generator 115. The secondary path 128 passes an anode side of the fuel cell 110 to provide the hydrogen to the fuel cell 110. The secondary path 128 is part of an anode loop, which includes all the paths that hydrogen recirculates through, including interiors of components that the hydrogen passes through.

Hydrogen from the hydrogen path 125 reacts with oxygen from the air in the air path 120 in the fuel cell 110, producing electrical power. In some examples, the fuel cell 110 provides current to the controller 135 that charges the Li-ion battery or batteries 130. The controller 135 may also provide power to a load, such as the UAV, via contacts 180. The controller 135 may comprise a microprocessor, circuitry, and other electronics to receive data representative of sensed pressure, temperature, and other parameters and utilize control algorithms, such as proportional/integral/ derivative (PID) or other type of algorithms to control mechanisms to modify the parameters to meet one or more different setpoints. The controller 135 may also be referred to as a power management module or controller 135.

While the fuel cell 110 produces the electrical power, it may also produce byproducts from the chemical reaction. The byproducts on the cathode side of the fuel cell 110 (e.g., water vapor and heat) may be removed by the air flowing within the air path 120 and continue on to an air path portion 122. The hot, humid air may continue through the air path 120 to a first water exchanger 155. The water exchanger 155 extracts water from the hot, humid air and passes the extracted water into a path 124 (anode loop). The hot, drier (e.g., dehumidified) air may continue through a path 122' to a second water exchanger 157, where heat and water may be passed into the cathode loop. This heat and water may raise the temperature and humidity of the incoming ambient air, which may improve performance of the fuel cell 110. After exiting the second water exchanger 157, the warm, dry air may be exhausted to the ambient at an outlet 160. In some embodiments a single water exchanger which combines the functions of the first and second water exchangers 155 and 157 (e.g. has separate flow paths for the anode and cathode loops) may be used.

The extracted water from the air path 120 may be then provided to the hydrogen to create humid hydrogen (H₂) at the path 124. This humid hydrogen then flows to the hydrogen generator 115 where water therein interacts with the hydrogen to produce fuel to generate additional hydrogen. The now dry hydrogen leaves the hydrogen generator 115 and flows into blower 165, which raises the pressure. The higher pressure, dry hydrogen then progresses through the hydrogen path 125 to the junction 127 where some of the dry hydrogen enters the primary path 126 to be recirculated and some of the dry hydrogen enters the secondary path 128 to be provided for the electrochemical reaction in the fuel cell 110.

Leftover hydrogen and any inert gases that leak/permeate into the anode loop over time may continue through the hydrogen path 125. In some examples, as shown in FIG. 1, the secondary path 128 can include a purge valve 129 that purges the inert gases (e.g. nitrogen, water vapor) that build up over time in the anode loop into an air path portion 123 of the air path 120. These gases are purged periodically by actuating the purge valve 129, for example, based on predetermined timing or a sensed parameter such as fuel cell voltage or hydrogen concentration. In some embodiments, the purge valve 129 may be slightly open most of the time to continuously remove the inert gases, with most of the hydrogen flowing to and being consumed by the anode of the fuel cell 110.

Various sensors can be utilized to monitor components of power generator 100. For example, the various components of power generator 100 can include temperature sensors that can transmit temperatures of the hydrogen generator 115, the fuel cell 110, and/or the first water exchanger 155 and/or the second water exchanger 157 to the controller 135. In some examples, the controller 135 can maintain operating temperatures of the hydrogen generator 115, the fuel cell 110, and/or the first water exchanger 155 and/or the second water exchanger 157 utilizing a fan and/or fans ( e.g., operation of the fan/fans can lower the operating temperatures). In some examples, the controller 135 can maintain operating temperatures of the hydrogen generator 115, the fuel cell 110, and/or the first water exchanger 155 and/or the second water exchanger 157 utilizing a pump circulating cooling fluid to the components of power generator 100 (e.g., operation of the pump circulating the cooling fluid can lower the operating temperatures). In the example of FIG. 1, the power generator 100 includes a first cooling mechanism 131 configured to cool the hydrogen generator 115, a second cooling mechanism 132 configured to cool the fuel cell 110, a pressure sensor 133, and a temperature sensor 143.

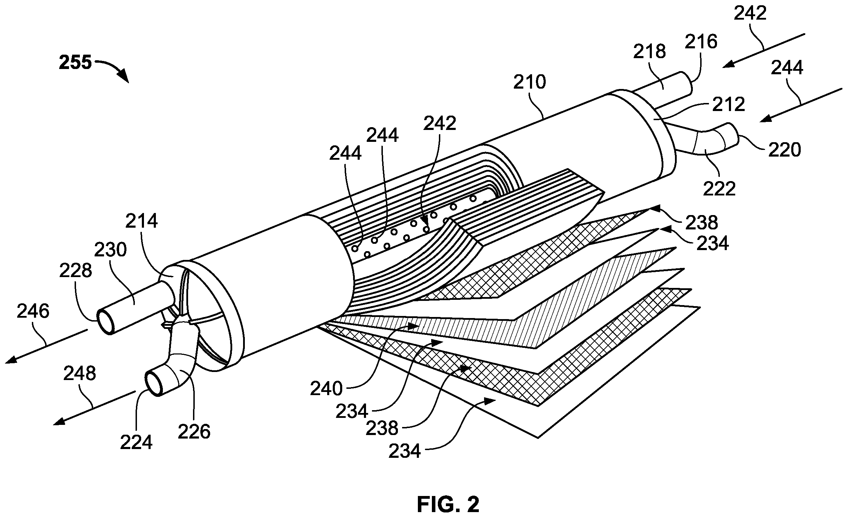

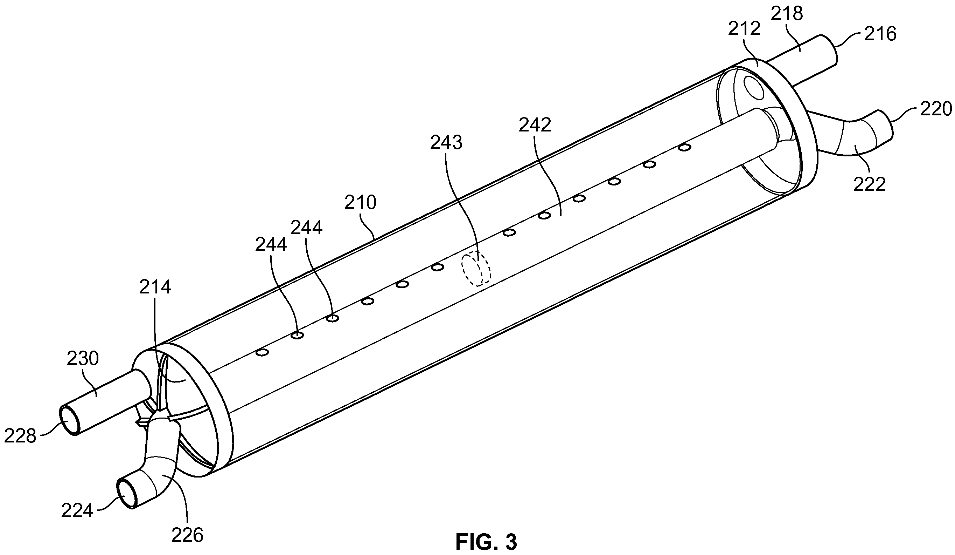

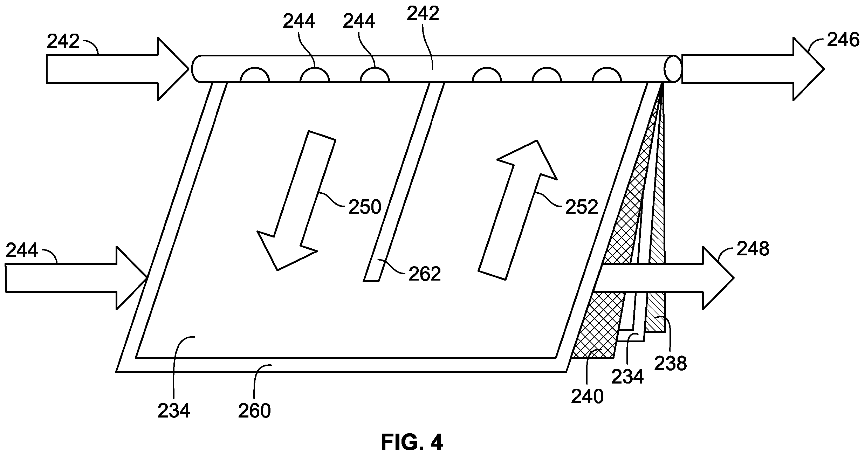

FIGS. 2, 3, and 4 illustrate various aspects of a water exchanger 255 for a fuel cell based power generator (e.g., the power generator 100) according to an example. In this example, the water exchanger 255 is a spiral wound water exchanger. FIG. 2 illustrates a perspective, partially exploded view of the water exchanger 255, FIG. 3 illustrates a perspective view of certain structural components of the water exchanger 255, and FIG. 4 illustrates an isolated view of certain layers of the water exchanger 255. The water exchanger 255 can be, for example, either of the water exchangers 155 and 157 previously described in connection with FIG. 1. For convenience, the water exchanger 255 will be described herein in reference to use as the water exchanger 155.

As shown in FIGS. 2, 3, and 4, the water exchanger 255 may include a housing or shell 210 having an internal compartment defined between internal surfaces of the shell 210, a first end cap 212, and an oppositely-disposed, second end cap 214. An air inlet 220 is defined by an opening in an air inlet tube 222 coupled to the first end cap 212, an air outlet 224 is defined by an opening in an air outlet tube 226 coupled to the second end cap 214, and the air inlet tube 222 and the air outlet tube 226 are fluidically coupled by a central tube 242 disposed within the internal compartment and extending between the first end cap 212 and the second end cap 214 along a central, longitudinal axis of the shell 210. A hydrogen inlet 216 is defined by an opening in a hydrogen inlet tube 218 coupled to the first end cap 212, a hydrogen outlet 228 is defined by an opening in a hydrogen outlet tube 230 coupled to the second end cap 214, and the hydrogen inlet tube 218 and the hydrogen outlet tube 230 are fluidically coupled by the internal compartment.

The water exchanger 255 includes one or more sheets of hydrogen spacers 240 (feed spacers) attached to and extending from the central tube 242. Envelopes are attached to the central tube 242 between each of the hydrogen spacers 240. Each of the envelopes includes a membrane sheet folded in half to define a pair of membranes 234, and an air spacer 238 (permeate spacer) disposed between the pair of membranes 234. Glue is applied on the outer surface of the folded membrane sheet, along edges as shown in FIG. 2, to define a first glue line 260 that seals the air spacer 238 therebetween and thereby ensures that the hydrogen and air streams flow independently without being mixed with each other. The water exchanger 255 may have any number of the hydrogen spacers 240 and the envelopes.

The water exchanger 255 may include sets of the membranes 234, the air spacers 238, and the hydrogen spacers 240 that are rolled or wound around the central tube 242 and enclosed within the shell 210. As a result, the stream of air flows from the central tube 242 into the air spacers 238, in a spiral direction through the air spacers 238, and back to the central tube 242, where it is collected. The stream of hydrogen flows in the longitudinal direction as shown in FIG. 4. If there is more than one envelope in the shell 210, the air stream flows in separate streams through each of the envelopes, that is, through the air spacers 238 and between pair of membranes 234 or each of the envelopes, while the hydrogen stream flows in the one or more hydrogen spacers 240 disposed between each of the envelopes.

During operation of the power generator 100, the water exchanger 255 receives the humid air (e.g., from the air path 120) into the air inlet 220 (air flow indicated with an arrow 244), and receives the dry hydrogen (e.g., from the primary path 126) into the hydrogen inlet 216 (hydrogen flow indicated with an arrow 242). The humid air travels through the air inlet tube 222, into the central tube 242, through a plurality of holes 244 in the central tube 242, and into the air spacer(s) 238 of the envelope(s) that are in fluidic communication therewith.

In some examples, the central tube 242 is fluidically sealed adjacent to a longitudinally central region thereof, for example, with a wall 243 to separate the central tube 242 into a first portion and a second portion, wherein the first portion and the second portion are in fluidic communication through the plurality of air spacers 238. With this arrangement, an entirety of the stream of air flows through the air spacers 238 rather than directly through the central tube 242.

The dry hydrogen travels through the hydrogen inlet tube 218, and into the hydrogen spacer(s) 240 that are in fluidic communication therewith. With this arrangement, paths within the internal compartment traveled by the humid air and the dry hydrogen are separated by the membranes 234. As the humid air and dry hydrogen pass through the water exchanger 255, water from the humid air passes through the membranes 234 from the humid air to the dry hydrogen. To further encourage water movement, each of the membranes 234 may include a second glue line 262 contacting the central tube 242 near a central area of the membrane 234 and extending radially outward over a portion of the membrane 234 but ceasing prior to containing the first glue line 260. With this arrangement, the water is encouraged to saturate substantially an entirety of the membranes 234 and thereby promote fluid transport. Exemplary flow paths of the water vapor in the membranes 234 are represented with arrows 250 and 252 in FIG. 4.

Toward the second end cap 214, the now dehumidified air may reenter the central tube 242 through the plurality of holes 244, travel through the central tube 242, through the air outlet tube 226, and exit the water exchanger 255 from the air outlet 224 (e.g., into the path 122'). The now humidified (e.g., wet) hydrogen may travel from the hydrogen spacer(s) 240, into the hydrogen outlet tube 230, and exit the water exchanger 255 from the hydrogen outlet 228 (e.g., into the path 124).

In various examples, the flow paths may be reversed, that is, the stream of hydrogen may be flowed through the central tube 242 and the air may be flowed through the spacers in fluidic communication with the first end cap 212 and the second end cap 214.

The membranes 234 may include various materials that are hydrophilic to promote water transport, but non-permeable or semipermeable to various gases, such as oxygen and hydrogen. In some examples, the membranes 234 may include various ionomers including certain fluoropolymers such as perfluorosulfonic acid (PFSA) polymers (e.g., Nafion^{™}), certain polyaromatic polymers, and certain partially fluorinated polymers. The air spacers 238 and the hydrogen spacers 240 may include various materials, including certain polymeric materials and composite materials (e.g., one or more non-polymeric materials embedded in a polymeric matrix). In some examples, one or both of the air spacers 238 and the hydrogen spacers 240 may include polyester. Structural components of the water exchanger 255 such as the shell 210, the first end cap 212, the second end cap 214, the air inlet tube 222, the hydrogen inlet tube 218, the air outlet tube 226, the hydrogen outlet tube 230, and/or the central tube 242 may be formed of various materials including various polymeric, metallic, and composite materials. In some examples, one or more of the structural components may include nylon and/or nylon-based materials.

The water exchanger 255 and it components may have various shapes and sizes. The quantity and size of the membranes 234 may vary based on the target active area for the water exchanger 255. In some examples, the target active area may be about 1.3 square meters (m²). In some examples, the membranes 234 have a thickness of about 50 micrometers (µm) or less.

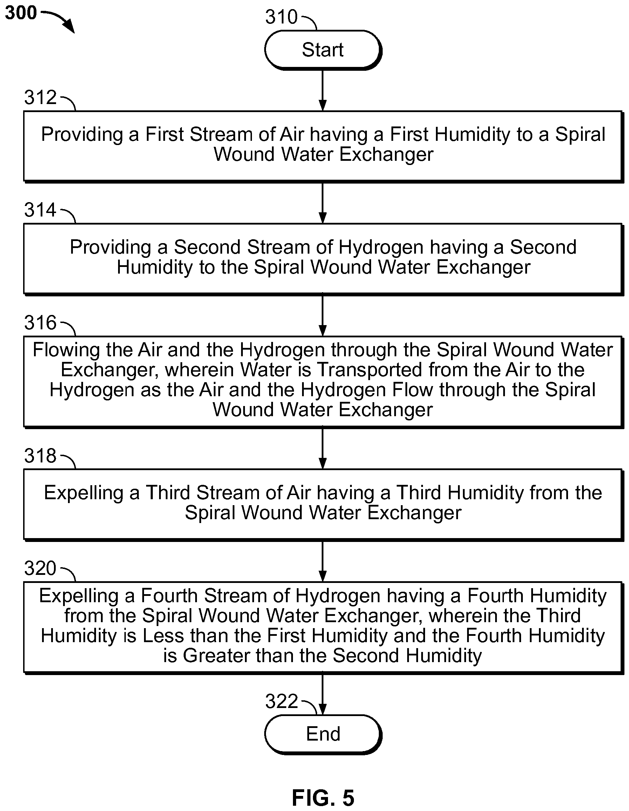

Referring now to FIG. 5, a flowchart illustrating an exemplary method 300 is provided for exchanging water vapor from a stream of air to a stream of hydrogen, for example, in a fuel cell based power generator (e.g., the power generator 100). The method 300 may start at 310.

At 312, the method 300 may include providing a first stream of air having a first humidity to a spiral wound water exchanger, and at 314, the method 300 may include providing a second stream of hydrogen gas having a second humidity to the spiral wound water exchanger. In some examples relating to fuel cell based power generators, the method 300 may include providing oxygen to a cathode side of a fuel cell (e.g., the fuel cell 110) of a power generator from a source of air (e.g., via inlet 142 and air path 120), providing hydrogen to an anode side of the fuel cell from a hydrogen generator (e.g., the hydrogen generator 115) of the power generator, and generating electrical power with the fuel cell via a chemical reaction that consumes the hydrogen and the oxygen. In such examples, the method 300 may include directing the first stream of air from the cathode side of the fuel cell to a spiral wound water exchanger, and directing the second stream of hydrogen from the hydrogen generator to the spiral wound water exchanger.

In some examples, providing the first stream of air to the spiral wound water exchanger may include directing the first stream of air to a plurality of envelopes of the spiral wound water exchanger that are fixed to and extend from the central tube. Each of the envelopes may include a first permeable spacer (e.g., the air spacers 238) disposed between a pair of membranes (e.g., the membranes 234). The membranes are selectively permeable to water and nonpermeable to hydrogen and oxygen, and each of the pair of membranes may include glue lines (e.g., the glue lines 260) along edges thereof configured to seal the first permeable spacers. Each of the first permeable spacers may be in fluidic communication with at least some of a plurality of holes (e.g., the holes 244) along the central tube and receive the air from the at least some of the plurality of holes.

In some examples, providing the second stream of hydrogen to the spiral wound water exchanger includes direction the second stream of hydrogen to a plurality of second permeable spacers (e.g., the hydrogen spacers 240) of the spiral wound water exchanger that are fixed to and extend from a central tube (e.g., the central tube 242) of the spiral wound water exchanger. Each of the plurality of second permeable spacers may be disposed between a pair of the envelopes.

At 316, the method 300 may include flowing the air and the hydrogen through the spiral wound water exchanger. As the air and the hydrogen flow through the spiral wound water exchanger, water may be transported from the air to the hydrogen, for example, via the membranes of the spiral wound water exchanger.

At 318, the method 300 may include expelling a third stream of air having a third humidity from the spiral wound water exchanger, and at 320, the method 300 may include expelling a fourth stream of hydrogen having a fourth humidity from the spiral wound water exchanger. In some examples, the third humidity may be less than the first humidity and the fourth humidity may be greater than the second humidity. That is, the humidity of the air decreases as it flows through the water exchanger and the humidity of the hydrogen increases as it flows through the water exchanger.

In some examples relating to fuel cell based power generators, the method 300 may include directing the fourth stream of hydrogen from the spiral wound water exchanger to the hydrogen generator. In some examples, the method 300 may include transferring water from the third stream of air from the spiral wound water exchanger to intake air received from the source of air prior to the air received therefrom being provided to the cathode side of the fuel cell. In some examples, the water may be transferred from the third stream of air to the intake air with a second spiral wound water exchanger.

The method 300 may end at 322.

The systems and methods disclosed herein provide various benefits over certain existing systems and methods. For example, the systems and methods may provide for water exchange between air and hydrogen streams within a fuel cell based power generator in a reliable and economical manner using the spiral wound water exchanger(s). The power generators having the light-weight, low-pressure drop spiral wound water exchanger(s) may be capable improving energy storage for battery powered systems, such as UAVs, and thereby promote increase time of use thereof (e.g., increased UAV endurance (e.g., flight time)).

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A power generator, comprising:
a fuel cell configured to generate electrical power via a chemical reaction that consumes hydrogen and oxygen;
a source of air configured to provide the oxygen to a cathode side of the fuel cell;
a hydrogen generator coupled to provide the hydrogen to an anode side of the fuel cell; and
a spiral wound water exchanger configured to:
receive air having a first humidity from the cathode side of the fuel cell and the hydrogen having a second humidity from the hydrogen generator;
transfer water from the air to the hydrogen; and
expel the air having a third humidity and the hydrogen having a fourth humidity hydrogen, wherein the third humidity is less than the first humidity and the fourth humidity is greater than the second humidity;
wherein the hydrogen is provided from the spiral wound water exchanger to the hydrogen generator.

2. The power generator of claim 1, wherein the spiral wound water exchanger includes:
a shell having first end, a second end, and an interior compartment between the first end and the second end;
a central tube within the shell extending between the first end and the second end and aligned along a longitudinal center axis of the shell and having a plurality of holes along a longitudinal length thereof;
a plurality of envelopes fixed to and extending from the central tube, each of the plurality of envelopes including a first permeable spacer disposed between a pair of membranes, wherein the pair of membranes are selectively permeable to water and nonpermeable to hydrogen and oxygen, wherein each of the pair of membranes include a first glue line along edges thereof configured to seal the first permeable spacer therebetween, each of the first permeable spacers in fluidic communication with at least some of the plurality of holes along the central tube;
a plurality of second permeable spacers fixed to and extending from the central tube, each of the plurality of second permeable spacers disposed between a corresponding pair of the envelopes;
an air inlet configured to supply air to the central tube at the first end of the shell;
an air outlet configured to receive the air from the central tube at the second end of the shell;
a feed inlet configured to supply the hydrogen to the plurality of second permeable spacers at the first end of the shell; and
a feed outlet configured to receive the hydrogen from the plurality of second permeable spacers at the second end of the shell,
wherein the plurality of envelopes and the plurality of second permeable spacers are wound about the central tube within the shell to define a spiral wound structure.

3. The power generator of claim 2, wherein the pair of membranes include a fluoropolymer, polyaromatic polymer, or a partially fluorinated polymer.

4. The power generator of claim 2, wherein each of the pair of membranes have a thickness of 50 micrometers or less.

5. The power generator of claim 2, wherein each of the pair of membranes include a partial glue line contacting the central tube near a central area of each of the pair of membranes and extending radially outward over a portion of each of the pair of membranes and ceasing prior to containing the first glue line.

6. The power generator of claim 2, wherein the central tube is fluidically sealed adjacent to a longitudinally central region thereof to separate the central tube into a first portion and a second portion, wherein the first portion and the second portion are in fluidic communication through the plurality of first permeable spacers.

7. A method, comprising:
providing a first stream of air having a first humidity to a spiral wound water exchanger;
providing a second stream of hydrogen having a second humidity to the spiral wound water exchanger;
flowing the air and the hydrogen through the spiral wound water exchanger, wherein water is transported from the air to the hydrogen as the air and the hydrogen flow through the spiral wound water exchanger;
expelling a third stream of air having a third humidity from the spiral wound water exchanger; and
expelling a fourth stream of hydrogen having a fourth humidity from the spiral wound water exchanger, wherein the third humidity is less than the first humidity and the fourth humidity is greater than the second humidity.

8. The method of claim 7, wherein:
providing the first stream of air to the spiral wound water exchanger includes directing the first stream of air into a plurality of envelopes of the spiral wound water exchanger, the plurality of envelopes fixed to and extending from the central tube, each of the plurality of envelopes including a first permeable spacer disposed between a pair of membranes, wherein the pair of membranes are selectively permeable to the water and nonpermeable to hydrogen and oxygen, wherein each of the pair of membranes include a first glue line along edges thereof configured to seal the first permeable spacers therebetween, wherein each of the first permeable spacers is in fluidic communication with at least some of a plurality of holes along the central tube and receive the air from the at least some of the plurality of holes; and
providing the second stream of hydrogen to the spiral wound water exchanger includes direction the second stream of hydrogen to a plurality of second permeable spacers of the spiral wound water exchanger, each of the plurality of second permeable spacers disposed between a corresponding pair of the plurality of envelopes, wherein the plurality of second permeable spacers are fixed to and extending from a central tube of the spiral wound water exchanger, and
wherein the water is transported from the air to the hydrogen via the pair of membranes of each of the plurality of envelopes as the air and the hydrogen flow through the spiral wound water exchanger.

9. The method of claim 8, wherein the pair of membranes include a fluoropolymer, polyaromatic polymer, or a partially fluorinated polymer.

10. The method of claim 8, wherein each of the pair of membranes have a thickness of 50 micrometers or less.

11. The method of claim 8, wherein each of the pair of membranes include a partial glue line contacting the central tube near a central area of each of the pair of membranes and extending radially outward over a portion of each of the pair of membranes and ceasing prior to containing the first glue line.

12. The method of claim 8, wherein the central tube is fluidically sealed adjacent to a longitudinally central region thereof to separate the central tube into a first portion and a second portion, wherein the first portion and the second portion are in fluidic communication through the plurality of first permeable spacers.

13. The method of claim 7, further comprising:
providing oxygen to a cathode side of a fuel cell of a power generator from a source of air;
providing hydrogen to an anode side of the fuel cell from a hydrogen generator of the power generator;
generating electrical power with the fuel cell via a chemical reaction that consumes the hydrogen and the oxygen;
directing the first stream of air from the cathode side of the fuel cell to the spiral wound water exchanger;
directing the second stream of hydrogen from the hydrogen generator to the spiral wound water exchanger; and
directing the fourth stream of hydrogen from the spiral wound water exchanger to the hydrogen generator.

14. The method of claim 13, further comprising transferring water from the third stream of air from the spiral wound water exchanger to intake air received from the source of air prior to the air received therefrom being provided to the cathode side of the fuel cell.

15. The method of claim 14, wherein the water is transferred from the third stream of air to the intake air with a second spiral wound water exchanger.
